Europäisches Patentamt

(19) European Patent Office

Office européen des brevets

(11) Publication number: **0 318 171 B1**

# EUROPEAN PATENT SPECIFICATION

(45) Date of publication of patent specification:
18.12.91 Bulletin 91/51

(51) Int. Cl.⁵: **C08J 5/10, C08L 21/00**

(21) Application number: 88310453.1

(22) Date of filing: 07.11.88

(54) Composite material.

(30) Priority: 07.11.87 JP 281777/87
04.12.87 JP 308093/87

(43) Date of publication of application:
31.05.89 Bulletin 89/22

(45) Publication of the grant of the patent:
18.12.91 Bulletin 91/51

(84) Designated Contracting States:
DE FR GB

(56) References cited:
EP-A- 0 008 201
EP-A- 0 009 846
KAUTSCHUK UND GUMMI-KUNSTSTOFFE,
vol. 25, no. 11, November 1972, pages 531-537,
Dr. Hutkig Verlag, Heidelberg, DE; K.D.
ALBRECHT: "Untersuchung über den Einfluss
des Vulkanisations-Systems auf Gum-
mi/Gewebe- und Gummi/Stahlcord-Haftung"
J. VAN ALPHEN: "Rubber Chemicals", 1973,
pages 36-37, D. Reidel Publishing Co., edited
by C.M. VAN TURNHOUT, Plastics and Rubber
Research Institute TNO, Delft, NL

(73) Proprietor: SUMITOMO RUBBER INDUSTRIES
LIMITED
No. 1-1, Tsutsui-cho 1-chome
Fukiai-ku Kobe-shi Hyogo (JP)

(72) Inventor: Muraoka, Kiyoshige
3-2 Oyashikidori 4-chome Nagata-ku
Kobe-shi Hyogo (JP)
Inventor: Uchida, Mamoru
5-29 Kitamachi 3-chome Nishiakashi
Akashi-shi Hyogo (JP)
Inventor: Taguchi, Takafumi
16-106-206 Edagawa-cho
Nishinomiya-shi Hyogo (JP)

(74) Representative: Stewart, Charles Geoffrey
SP TYRES UK LIMITED Tyre Technical
Division
Fort Dunlop Birmingham B24 9QT (GB)

## Description

The present invention relates to a composite material comprising a rubber material or compound and a metal material. More particularly, the present invention relates to a composite material that is adapted for use in industrial rubber articles such as tyres for vehicles and conveyor belts and which retains good adhesion between metal and rubber even after the latter's ageing.

The performance required of tyres for vehicles, conveyor belts and other industrial rubber articles has become increasingly greater. In the use of tyres for vehicles, radial tyres are extensively used not only as tyres for passenger cars but also as tyres for larger vehicles such as trucks and buses. The useful life of tyres has been remarkably extended for several reasons including the advantages in the mixing technology of tread rubber. Larger tyres such as those used for trucks and buses are retreaded after the end of their first life so that they are put to service for second and even third tread lives. Tyre life sometimes extends to several hundred thousand kilometres and the belts and carcasses of the tyres are both required to perform satisfactorily for this period.

In such radial tyres, rubber-coated steel cords are used to form the belts and/or the carcass in order to improve steering stability, structural durability, wear resistance and puncture resistance of the tyres. With such tyres, the adhesion between the rubber material and the metal material can however, be a problem.

Rubber material normally adheres to metal material when sulphur mixed in the rubber material during vulcanisation reacts with copper in the plating on the metal material so as to form a sulphide at the rubber-metal interface. When a tyre is rolling on the road, the hysteresis loss in the rubber material generates heat and if the generated heat is large enough to break the adhesion between the rubber material and the metal material, the rubber will separate from the steel cord and this "separation" renders further rolling of the tyre on the road impossible.

Further, the tyre tread or sidewall may sometimes be damaged when the tyre is used in a vehicle. If the damage is deep enough to reach the steel cord, moisture that has permeated the tyre through the damaged part may be vaporised by the heat generated during tyre running and the vapour gets into the space between the filaments of the steel cords and this may destroy the adhesion between the steel cord and the coating rubber, thereby inducing "separation" of the components of the tyre.

A further problem may occur if the tyre is inflated with air containing moisture. The moisture penetrates through the inner liner of the tyre and reaches the steel cord and then this may induce "separation" by breaking the adhesion between the rubber and the steel cord.

With a view to avoiding these phenomena, various techniques have been proposed that are mainly intended to improve the adhesion between the rubber and the steel cords. One of the techniques proposed concerns the compounding techniques for the rubber material with which the steel cords are coated. It was discovered as early as in the ninetten-fifties that the adhesion between the rubber and the steel cords could be improved by incorporating cobalt salts of organic acids in the rubber material, and many studies have been conducted regarding the quantity and type of the cobalt salts to be added. For example in JP-A-60-42440 (the term "JP-A" as used herein refers to a "published unexamined Japanese patent application") discloses improved adhesion attained by optimising the quantities of sulphur and cobalt salts or organic acids. Another approach, exemplified in Kautschuk and Gummi-Kunststoffe, Vol. 25, No. 11, Pages 531-537, has been to use the HRH based composition mixing white carbon, resorcin and hexamethylenetetramine. However, if the cobalt salts of organic acids are added in large amouts, the unvulcanised rubber is deteriorated or there is a deterioration of the adhesion power due to thermal ageing either on account of hot or prolonged vulcanisation or running of the tyre on the road for a distance of many hundred kilometres. On the other hand, the HRH based compositions cause problems during production such as environmental pollution and rubber scorching.

The second approach that has been taken to improve the adhesion beween the rubber and the steel cords is directed at the plating layer deposited on the metal material. JP-B-51-8389 (the term "JP-B" as used herein refers to an "examined Japanese patent publication") and JP-A-55-105548 discloses a plating layer containing nickel. More complex alloy platings containing three of four metals are disclosed in JP-A-55-45884, JP-A-55-71887, JP-A-55-105548, JP-A-56-826045, JP-A-54-89940, JP-A-61-243194, and JP-A-61-72545. Platings of ternary alloys of copper, zinc and nickel for bonding to conventional rubber compositions are disclosed in EP-A-0009846 and EP-A-0008201.

An object of the present invention is to provide a composite material comprising a rubber composition and a metal reinforced material that is successfully improved over the prior art not only in adhesion after thermal ageing but also in adhesion after wet heat ageing (hereinafter referred to as "heat resistance" and "wet heat resistance", respectively) without causing other problems, in particular, those which have conventionally been encountered during production.

Accordingly the present invention provide a metal material having an improved plating layer and a rubber material having a compound formulation especially suitable for this metal material. More specifically, the present invention provides a composite material comprising a rubber composition which contains, per 100 parts by weight of rubber, 0 to 0.5 parts by weight of a cobalt salt of an organic acid, 3 to 6 parts by weight of sulphur, and N-oxydiethylene-2- benzothiazolylsulphenamide or N-tert-butyl-2-benzothiazolyl-sulphenamide as a vulcanisation accelerator, and the metal material is provided with a plating of a ternary alloy consisting of copper, zinc, and nickel.

Examples of the cobalt salts of organic acids that can be used in the present invention include cobalt naphthenate, cobalt oleate, cobalt maleate and cobalt stearate. In order to ensure high initial strength of adhesion, these cobalt salts of organic acids preferably contain cobalt in an amount of 8 to 10 wt%.

The form of the metal reinforcement material can be freely chosen in accordance with the type of industrial article to which the composite material of the present invention is applied. If it is applied to conveyor belts or tyres for vehicles, the metal is preferably used in the form of cords, particularly in the form of steel cords.

It has generally been held that high initial strength of adhesion is not attainable unless cobalt salts or organic acids are used in amounts exceeding 0.5 part by weight per 100 parts by weight of rubber. However, in accordance with the present invention, N-oxydiethylene-2-benzothiazolysulphenamide or N-tert-butyl-2-benzothiazolysulphenamide is added to the rubber as a vulcanisation accelerator and the resulting rubber composition is combined with a metal material provided with a plating of a ternary alloy consisting of copper, zinc and nickel, and this ensures satisfactory strength of adhesion even if a cobalt salt of an organic acid is present in an amount of not more than 0.5 part by weight. Indeed more particularly a satisfactory strength of adhesion is ensured even in an extreme case where such the cobalt salts of organic acids are entirely absent. Therefore, the present invention is capable of avoiding the problems during production and ageing after vulcanisation which have occurred in the prior art on account of the incorporation of large amounts (greater than 0.5%) of cobalt salts of organic acids.

If the rubber composition of the present invention contains less than 3 parts by weight of sulphur, satisfactory initial strength of adhesion is not attainable. If the sulphur content exceeds 6 parts by weight, the heat resistance of the resulting composite material is impaired. Accordingly, the amount of sulphur used in the rubber composition of the present invention is generally 3 to 6 parts by weight and more preferably 3.5 t 5.5 parts by weight, per 100 parts by weight of rubber.

The vulcanisation accelerator is preferably used in the present invention in an amount of from 0.5 to 2 parts by weight and more preferably from 0.5 to 1.5 parts by weight, per 100 parts by weight of rubber. If the vulcanisation accelerator is incorporated in an amount of less than 0.5 part by weight, the speed of vulcanisation tends to be slow and poor adhesion often results. If the content of the vulcanisation accelerator exceeds 2 parts by weight, the modulus of the rubber becomes so high as to occasionally cause adverse effects on the adhesion between the rubber material and the metal material or the breaking strength of the rubber itself.

The metal material of the composite material of the present invention must be plated with a ternary alloy consisting of copper, zinc and nickel. An advantageous composition of this plating alloy consists of 60 to 75 wt% copper, 4 to 10 wt% nickel and the balance being zinc. If the copper content is less than 60 wt% the desired initial strength of adhesion is not attainable. If copper is present in an amount exceeding 75 wt%, the contents of nickel and zinc are reduced too much to ensure satisfactory heat and wet heat resistance. Nickel need not be present in a large amount and a required minimum amount is preferably 4 wt%. If the nickel content exceeds 10 wt%, the reaction of adhesion is inhibited and the necessary initial strength of adhesion is difficult to obtain.

The following example is provided for the purpose of illustrating the present invention but the present invention is not to be construed as being limited thereto.

Rubber compositions having the basic mixing preparation (recipe) shown in Table 1 were prepared by varying the amounts of sulphur and cobalt stearate as well as the type and amount of vulcanisation accelerator, as shown in Table 2.

## TABLE 1

| Ingredients | Parts by weight |
|---|---|
| Natural rubber | 100 |
| HAF (High Abrasion Furnance) | 50 |
| Zinc white (ZnO) | 8 |
| Antiaging agent* | 2 |
| Cobalt stearate** | Variable (see Table 2) |
| Sulpher | Variable (see Table 2) |
| Vulcanization accelerator | Variable (see Table 2) |

\* 2,2,4-Trimethyl-1,2-dihydroquinoline polymer

\*\* Cobalt content = 9 wt%

In Table 2, Rubber Composition Nos. 1 to 18 were those prepared in accordance with the present invention.

TABLE 2

| Sample No. | Rubber Composition (mixing ratio) | | | |
|---|---|---|---|---|
| | Cobalt Stearate Amount (pts. by wt.) | Sulphur Amount (pts. by wt.) | Vulcanization Accelerator Type* | Amount (pts. by wt.) |
| 1 | 0 | 3.5 | A | 1.0 |
| 2 | 0 | 4.5 | " | 1.0 |
| 3 | 0 | 5.5 | " | 1.0 |
| 4 | 0.5 | 3.5 | " | 1.0 |
| 5 | 0.5 | 4.5 | " | 1.0 |
| 6 | 0.5 | 5.5 | " | 1.0 |
| 7 | 0 | 3.5 | B | 1.0 |
| 8 | 0 | 4.5 | " | 1.0 |
| 9 | 0 | 5.5 | " | 1.0 |
| 10 | 0.5 | 3.5 | " | 1.0 |
| 11 | 0.5 | 4.5 | " | 1.0 |
| 12 | 0.5 | 5.5 | " | 1.0 |
| 13 | 0 | 4.5 | A | 0.5 |
| 14 | 0 | 4.5 | " | 2.0 |
| 15 | 0 | 4.5 | " | 2.5 |
| 16 | 0 | 4.5 | B | 0.5 |
| 17 | 0 | 4.5 | " | 2.0 |
| 18 | 0 | 4.5 | " | 2.5 |
| 19 | 1.0 | 3.0 | C | 1.0 |
| 20 | 1.0 | 3.5 | " | 1.0 |
| 21 | 1.0 | 5.0 | " | 1.0 |

(cont'd)

| Sample No. | Rubber Composition (mixing ratio) | | | |
|---|---|---|---|---|
| | Cobalt Stearate Amount (pts. by wt.) | Sulfur Amount (pts. by wt.) | Vulcanization Accelerator Type* | Amount (pts. by wt.) |
| 22 | 1.0 | 5.5 | C | 1.0 |
| 23 | 1.0 | 6.5 | " | 1.0 |
| 24 | 1.0 | 7.0 | " | 1.0 |
| 25 | 1.5 | 2.5 | " | 1.0 |
| 26 | 1.5 | 4.5 | " | 1.0 |
| 27 | 1.5 | 6.5 | " | 1.0 |
| 28 | 2.0 | 3.5 | " | 1.0 |
| 29 | 2.0 | 4.0 | " | 1.0 |
| 30 | 2.0 | 5.5 | " | 1.0 |
| 31 | 2.0 | 6.0 | " | 1.0 |
| 32 | 2.5 | 2.5 | " | 1.0 |
| 33 | 2.5 | 4.5 | " | 1.0 |
| 34 | 3.0 | 3.0 | " | 1.0 |
| 35 | 3.0 | 5.0 | " | 1.0 |
| 36 | 3.0 | 7.0 | " | 1.0 |
| 37 | 4.0 | 4.0 | " | 1.0 |
| 38 | 4.0 | 6.0 | " | 1.0 |
| 39 | 5.0 | 3.0 | " | 1.0 |
| 40 | 5.0 | 5.0 | " | 1.0 |
| 41 | 5.0 | 7.0 | " | 1.0 |
| 42 | 0 | 4.0 | " | 1.0 |
| 43 | 0 | 5.5 | " | 1.0 |

(cont'd)

| Sample No. | Rubber Composition (mixing ratio) | | | |
|---|---|---|---|---|
| | Cobalt Stearate Amount (pts. by wt.) | Sulphur Amount (pts. by wt.) | Vulcanization Accelerator | |
| | | | Type* | Amount (pts. by wt.) |
| 44 | 0 | 6.0 | C | 1.0 |
| 45 | 0 | 7.0 | " | 1.0 |
| 46 | 0.5 | 2.5 | " | 1.0 |
| 47 | 0.5 | 6.5 | " | 1.0 |
| 48 | 2.0 | 8.0 | " | 1.0 |
| 49 | 4.0 | 9.0 | " | 1.0 |
| 50 | 6.0 | 6.0 | " | 1.0 |
| 51 | 7.0 | 4.0 | " | 1.0 |
| 52 | 7.0 | 10.0 | " | 1.0 |

* A: N-Oxydiethylene-2-benzothiazolylsulfenamide (Invention)

  B: N-tert-Butyl-2-benzothiazolylsulfenamide (Invention)

  C: N,N-Dicyclohexyl-2-benzothiazolylsulfenamide (Comparison)


Subsequently, steel cords (1 x 5/0.25) were plated with alloys having the compositions shown in Table 3.

## TABLE 3

| Steel Cord Sample No. | Composition of Plating Alloy (wt%) | | | Remarks |
|---|---|---|---|---|
| | Copper | Zinc | Nickel | |
| A | 65 | 35 | 0 | Comparison |
| B | 65 | 33 | 2 | Invention |
| C | 65 | 31 | 4 | " |
| D | 65 | 29 | 6 | " |
| E | 65 | 27 | 8 | " |
| F | 65 | 25 | 10 | " |
| G | 65 | 10 | 25 | " |
| H | 65 | 5 | 35 | " |

The rubber compositions shown in Table 2 were combined in various ways with the steel cords shown in Table 3 and the resulting mixing compositions were vulcanized under predetermined conditions, followed by aging under the conditions shown in Table 4. Thereafter, the rubber material was peeled apart mechanically from the cords and the peel force, i.e., the force required to cause separation between the rubber and the cord, was measured. At the same time, the state of rubber adhered to the surface of cords was visually evaluated on a 10-point scoring basis. The results are shown in Table 5, as well as in Table 6. The greater the values shown in these tables, the better are the results.

## TABLE 4

| Ageing Condition | Ageing Condition | | |
|---|---|---|---|
| | Time (hr) | Temperature (°C) | Relative Humidity (%) |
| (a) | 0 | -- | -- |
| (b) | 400 | 80 | 95 |
| (c) | 24 | 120 | 100 |
| (d) | 96 | 120 | -- |

Condition (a) was used for measuring the initial strength of adhesion ; conditions (b) and (c) were used for measuring wet heat resistance ; and condition (d) was used for measuring heat resistance.

Among the combinations shown in Table 5 and Table 6, those consisting of Rubber Composition Samples 1 to 18 and Steel Cord Samples B to H provided composite materials within the scope of the present invention.

Table 5 shows the results of visual evaluation of rubber adhesion on a 10 point scoring basis and the greater the values shown in these tables, the better are the results.

Table 6 shows the results of measurements of peeling force.

**T A B L E  5 (State of Rubber Adhesion)**

Rubber Composition

| Steel Cord | Test Condition | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
|---|---|---|---|---|---|---|---|---|---|---|---|---|---|---|---|---|---|---|---|---|---|---|---|---|---|---|---|
| A | (a) | – | 10 | – | – | 10 | – | 6 | 7 | 8 | 7 | 8 | 9 | 8 | 10 | 7 | 8 | 8 | 7 | 9 | 9 | 10 | 10 | 10 | 10 | 9 | 10 |
|  | (b) | – | 10 | – | – | 10 | – | 6 | 7 | 7 | 7 | 7 | 8 | 7 | 8 | 7 | 7 | 7 | 7 | 5 | 8 | 5 | 8 | 8 | 6 | 8 | 8 |
|  | (c) | – | 7 | – | – | 8 | – | 4 | 5 | 5 | 6 | 7 | 7 | 6 | 7 | 6 | 6 | 6 | 6 | 5 | 8 | 6 | 9 | 8 | 6 | 7 | 6 |
|  | (d) | – | 6 | – | – | 6 | – | 6 | 6 | 6 | 6 | 6 | 5 | 6 | 6 | 6 | 6 | 5 | 6 | 7 | 7 | 7 | 7 | 7 | 6 | 5 | 5 |
| B | (a) | 10 | 10 | – | – | 10 | – | – | – | – | – | – | – | – | 10 | – | – | 9 | – | 9 | – | 10 | – | – | 10 | – | – |
|  | (b) | 9 | 10 | – | – | 10 | – | – | – | – | – | – | – | – | 9 | – | ⊥ | 9 | – | 4 | – | 5 | – | – | 5 | – | – |
|  | (c) | 7 | 8 | – | – | 9 | – | – | – | – | – | – | – | – | 8 | – | – | 8 | – | 8 | – | 8 | – | – | 6 | – | – |
|  | (d) | 7 | 7 | – | – | 6 | – | – | – | – | – | – | – | – | 6 | – | – | 6 | – | 7 | – | 8 | – | – | 6 | – | – |
| C | (a) | 10 | 10 | 10 | – | 10 | – | 10 | 10 | 10 | – | – | – | – | 10 | – | – | 9 | – | 8 | – | 10 | – | – | 10 | – | – |
|  | (b) | 10 | 10 | 10 | – | 10 | – | 10 | 10 | 10 | – | – | – | – | 10 | – | – | 10 | – | 5 | – | 7 | – | – | 7 | – | – |
|  | (c) | 9 | 10 | 10 | – | 10 | – | 9 | 10 | 10 | – | – | – | – | 10 | – | – | 9 | – | 7 | – | 9 | – | – | 7 | – | – |
|  | (d) | 9 | 10 | 10 | – | 10 | – | 10 | 10 | 10 | – | – | – | – | 10 | – | – | 10 | – | 8 | – | 9 | – | – | 6 | – | – |
| D | (a) | 9 | 10 | 10 | 10 | 10 | 10 | 9 | 10 | 10 | 9 | 10 | 10 | 10 | 10 | 10 | 10 | 10 | 10 | 8 | 10 | 10 | 9 | 9 | 9 | 7 | 8 |
|  | (b) | 10 | 10 | 10 | 10 | 10 | 9 | 10 | 10 | 10 | 10 | 10 | 10 | 10 | 10 | 10 | 10 | 10 | 10 | 4 | 9 | 9 | 10 | 10 | 6 | 8 | 8 |
|  | (c) | 9 | 10 | 10 | 10 | 10 | 10 | 10 | 10 | 9 | 10 | 10 | 10 | 10 | 10 | 10 | 10 | 10 | 10 | 8 | 9 | 10 | 9 | 9 | 8 | 8 | 9 |
|  | (d) | 9 | 10 | 10 | 10 | 10 | 10 | 10 | 10 | 10 | 10 | 10 | 10 | 10 | 10 | 10 | 10 | 10 | 10 | 8 | 7 | 9 | 7 | 7 | 6 | 6 | 7 |
| E | (a) | 9 | 10 | 10 | – | 10 | – | 10 | 10 | 10 | – | – | – | – | 10 | – | – | 10 | – | 7 | – | 10 | – | – | 9 | – | – |
|  | (b) | 10 | 10 | 10 | – | 10 | – | 10 | 10 | 10 | – | – | – | – | 10 | – | – | 10 | – | 6 | – | 8 | – | – | 6 | – | – |
|  | (c) | 10 | 10 | 10 | – | 10 | – | 10 | 10 | 10 | – | – | – | – | 10 | – | – | 10 | – | 6 | – | 10 | – | – | 8 | – | – |
|  | (d) | 9 | 10 | 10 | – | 10 | – | 10 | 10 | 10 | – | – | – | – | 10 | – | – | 10 | – | 7 | – | 9 | – | – | 6 | – | – |
| F | (a) | 9 | 9 | 10 | – | 10 | – | 9 | 10 | 10 | – | – | – | – | 9 | – | – | 9 | – | 6 | – | 10 | – | – | – | – | – |
|  | (b) | 9 | 10 | 10 | – | 10 | – | 10 | 10 | 10 | – | – | – | – | 10 | – | – | 9 | – | 5 | – | 7 | – | – | – | – | – |
|  | (c) | 10 | 10 | 10 | – | 10 | – | 10 | 10 | 10 | – | – | – | – | 10 | – | – | 10 | – | 5 | – | 9 | – | – | – | – | – |
|  | (d) | 9 | 9 | 10 | – | 10 | – | 10 | 10 | 10 | – | – | – | – | 10 | – | – | 10 | – | 6 | – | 9 | – | – | – | – | – |
| G | (a) | – | – | – | – | 8 | – | – | – | 5 | – | – | – | 6 | 7 | 7 | 6 | 7 | – | – | – | – | – | 7 | – | – | – |
|  | (b) | – | – | – | – | 6 | – | – | – | 7 | – | – | – | 7 | 7 | 7 | 6 | 7 | – | – | – | – | – | 8 | – | – | – |
|  | (c) | – | – | – | – | 6 | – | – | – | 6 | – | – | – | 6 | 6 | 6 | 6 | 6 | – | – | – | – | – | 8 | – | – | – |
|  | (d) | – | – | – | – | 5 | – | – | – | 6 | – | – | – | 6 | 6 | 6 | 6 | 6 | – | – | – | – | – | 5 | – | – | – |
| H | (a) | – | – | – | – | 6 | – | – | – | – | – | – | – | – | 5 | – | – | 5 | – | – | – | – | – | – | – | – | – |
|  | (b) | – | – | – | – | 6 | – | – | – | – | – | – | – | – | 6 | – | – | 5 | – | – | – | – | – | – | – | – | – |
|  | (c) | – | – | – | – | 6 | – | – | – | – | – | – | – | – | 6 | – | – | 5 | – | – | – | – | – | – | – | – | – |
|  | (d) | – | – | – | – | 5 | – | – | – | – | – | – | – | – | 5 | – | – | 5 | – | – | – | – | – | – | – | – | – |

9

## T A B L E  5 (continued)

### Rubber Composition

| Steel Cord | Test Condition | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 | 51 | 52 |
|---|---|---|---|---|---|---|---|---|---|---|---|---|---|---|---|---|---|---|---|---|---|---|---|---|---|---|---|
| A | (a) | 10 | 10 | 10 | 10 | 10 | 9 | 9 | 9 | 10 | 10 | 9 | 10 | 9 | 9 | 9 | 9 | 7 | 10 | 9 | 7 | 8 | 10 | 9 | 9 | 8 | 7 |
| A | (b) | 9 | 8 | 7 | 8 | 9 | 7 | 7 | 5 | 8 | 7 | 6 | 7 | 4 | 4 | 2 | 1 | 6 | 1 | 9 | 9 | 8 | 7 | 4 | 3 | 1 | 1 |
| A | (c) | 6 | 5 | 5 | 5 | 6 | 5 | 4 | 6 | 7 | 7 | 4 | 4 | 2 | 2 | 1 | 1 | 5 | 1 | 9 | 9 | 8 | 3 | 1 | 4 | 1 | 1 |
| A | (d) | 4 | 4 | 6 | 4 | 6 | 4 | 4 | 5 | 5 | 4 | 4 | 3 | 2 | 1 | 1 | 8 | 5 | 7 | 7 | 8 | 7 | 2 | 1 | 1 | 1 | 1 |
| B | (a) | – | – | 10 | – | 10 | – | – | 9 | 10 | 10 | 9 | 10 | 8 | 10 | 10 | 8 | – | 9 | – | – | – | 10 | 9 | 9 | 9 | 6 |
| B | (b) | – | – | 8 | – | 9 | – | – | 6 | 7 | 7 | 7 | 6 | 4 | 3 | 3 | 1 | – | 2 | – | – | – | 7 | 5 | 4 | 1 | 1 |
| B | (c) | – | – | 8 | – | 7 | – | – | 3 | 4 | 4 | 5 | 6 | 2 | 2 | 2 | 1 | – | 1 | – | – | – | 4 | 1 | 5 | 3 | 1 |
| B | (d) | – | – | 7 | – | 6 | – | – | 4 | 4 | 4 | 3 | 3 | 2 | 2 | 2 | 8 | – | 4 | – | – | – | 2 | 1 | 2 | 1 | 1 |
| C | (a) | – | – | 10 | – | 10 | – | – | 8 | 10 | 10 | 9 | 10 | 8 | 10 | 10 | 7 | – | 9 | – | – | – | 10 | 9 | 9 | 8 | 6 |
| C | (b) | – | – | 8 | – | 9 | – | – | 6 | 7 | 6 | 7 | 6 | 5 | 5 | 4 | 1 | – | 2 | – | – | – | 6 | 5 | 4 | 2 | 1 |
| C | (c) | – | – | 7 | – | 7 | – | – | 3 | 4 | 4 | 5 | 6 | 2 | 2 | 2 | 1 | – | 1 | – | – | – | 4 | 1 | 5 | 2 | 1 |
| C | (d) | – | – | 6 | – | 6 | – | – | 4 | 4 | 4 | 3 | 2 | 2 | 2 | 2 | 7 | – | 7 | – | – | – | 1 | 1 | 2 | 1 | 1 |
| D | (a) | 8 | 9 | 10 | 8 | 10 | 9 | 9 | 8 | 10 | 10 | 9 | 9 | 8 | 10 | 10 | 7 | 6 | 8 | 7 | 6 | 10 | 9 | 8 | 9 | 8 | 6 |
| D | (b) | 8 | 7 | 8 | 7 | 9 | 6 | 7 | 5 | 6 | 6 | 8 | 7 | 5 | 6 | 5 | 2 | 7 | 2 | 9 | 9 | 9 | 7 | 5 | 4 | 2 | 1 |
| D | (c) | 8 | 7 | 7 | 6 | 7 | 7 | 6 | 3 | 4 | 4 | 6 | 6 | 2 | 2 | 2 | 1 | 8 | 2 | 9 | 9 | 9 | 4 | 1 | 6 | 2 | 1 |
| D | (d) | 6 | 6 | 7 | 6 | 6 | 5 | 6 | 3 | 4 | 4 | 3 | 2 | 2 | 2 | 2 | 7 | 7 | 7 | 6 | 7 | 8 | 2 | 1 | 1 | 1 | 1 |
| E | (a) | – | – | 10 | – | 10 | – | – | 8 | 10 | 10 | 9 | 9 | 7 | 10 | 10 | 6 | – | 8 | – | – | – | 9 | 8 | 8 | 8 | 6 |
| E | (b) | – | – | 7 | – | 8 | – | – | 6 | 6 | 6 | 8 | 7 | 5 | 7 | 5 | 2 | – | 2 | – | – | – | 7 | 5 | 3 | 2 | 1 |
| E | (c) | – | – | 8 | – | 8 | – | – | 3 | 5 | 5 | 6 | 7 | 2 | 2 | 2 | 1 | – | 7 | – | – | – | 4 | 1 | 5 | 3 | 1 |
| E | (d) | – | – | 6 | – | 5 | – | – | 4 | 4 | 4 | 3 | 3 | 2 | 2 | 2 | 6 | – | 7 | – | – | – | 2 | 1 | 2 | 1 | 1 |
| E | (a) | – | – | 10 | – | 9 | – | – | 8 | 10 | 10 | 8 | 9 | 7 | 10 | 10 | 6 | – | 7 | – | – | – | 8 | 7 | 8 | 8 | 6 |
| E | (b) | – | – | 7 | – | 8 | – | – | 4 | 5 | 6 | 8 | 7 | 5 | 8 | 5 | 2 | – | 2 | – | – | – | 7 | 3 | 2 | 2 | 1 |
| E | (c) | – | – | 8 | – | 9 | – | – | 4 | 4 | 4 | 6 | 7 | 3 | 2 | 2 | 1 | – | 2 | – | – | – | 3 | 1 | 5 | 2 | 1 |
| E | (d) | – | – | 7 | – | 4 | – | – | 4 | 5 | 5 | 2 | 3 | 2 | 2 | 2 | 6 | – | 5 | – | – | – | 2 | 1 | 1 | 2 | 1 |
| G | (a) | – | – | 4 | – | – | – | – | – | – | – | 5 | 6 | 7 | 8 | 7 | – | 4 | – | – | – | – | – | – | – | – | – |
| G | (b) | – | – | 5 | – | – | – | – | – | – | – | 7 | 6 | 7 | 7 | 7 | – | 5 | – | – | – | – | – | – | – | – | – |
| G | (c) | – | – | 5 | – | – | – | – | – | – | – | 6 | 6 | 6 | 6 | 6 | – | 5 | – | – | – | – | – | – | – | – | – |
| G | (d) | – | – | 4 | – | – | – | – | – | – | – | 6 | 6 | 6 | 6 | 6 | – | 5 | – | – | – | – | – | – | – | – | – |
| H | (a) | – | – | – | – | – | – | – | – | – | – | – | – | – | – | – | – | – | – | – | – | – | – | – | – | – | – |
| H | (b) | – | – | – | – | – | – | – | – | – | – | – | – | – | – | – | – | – | – | – | – | – | – | – | – | – | – |
| H | (c) | – | – | – | – | – | – | – | – | – | – | – | – | – | – | – | – | – | – | – | – | – | – | – | – | – | – |
| H | (d) | – | – | – | – | – | – | – | – | – | – | – | – | – | – | – | – | – | – | – | – | – | – | – | – | – | – |

TABLE 6 Peeling Force (kgf/cm², 1 kgf = 9.80665N)

Rubber Composition

| Steel Cord | Test Condition | 1 | 2 | 3 | 4 | 5 | 6 | 8 | 9 | 10 | 13 | 14 | 15 | 16 | 17 | 18 | 20 | 22 | 23 | 25 | 26 | 27 | 30 | 32 | 33 | 43 | 45 | 46 | 47 |
|---|---|---|---|---|---|---|---|---|---|---|---|---|---|---|---|---|---|---|---|---|---|---|---|---|---|---|---|---|---|
| A | (a) | – | 6.2 | – | – | 6.3 | – | – | 5.7 | – | 5.9 | 6.3 | 6.3 | 5.8 | 5.7 | 5.7 | – | 6.2 | – | – | – | – | – | – | – | 5.5 | – | – | – |
|   | (b) | – | 5.4 | – | – | 5.4 | – | – | 4.3 | – | 5.0 | 5.1 | 4.8 | 4.2 | 4.1 | 4.0 | – | 4.8 | – | – | – | – | – | – | – | 4.2 | – | – | – |
|   | (c) | – | 4.5 | – | – | 4.9 | – | – | 3.1 | – | 4.6 | 4.5 | 4.0 | 3.2 | 3.0 | 2.9 | – | 5.0 | – | – | – | – | – | – | – | 3.1 | – | – | – |
|   | (d) | – | 3.6 | – | – | 3.5 | – | – | 3.2 | – | 3.5 | 3.0 | 2.8 | 3.2 | 2.8 | 2.5 | – | 3.7 | – | – | – | – | – | – | – | 3.0 | – | – | – |
| B | (a) | – | 6.2 | – | – | 6.2 | – | – | – | – | – | 6.2 | – | – | 6.0 | – | – | – | – | – | – | – | – | – | – | – | – | – | – |
|   | (b) | – | 5.4 | – | – | 5.5 | – | – | – | – | – | 5.4 | – | – | 5.2 | – | – | – | – | – | – | – | – | – | – | – | – | – | – |
|   | (c) | – | 4.9 | – | – | 4.9 | – | – | – | – | – | 4.7 | – | – | 4.7 | – | – | – | – | – | – | – | – | – | – | – | – | – | – |
|   | (d) | – | 3.8 | – | – | 3.6 | – | – | – | – | – | 3.5 | – | – | 3.3 | – | – | – | – | – | – | – | – | – | – | – | – | – | – |
| C | (a) | 6.1 | 6.2 | 6.3 | – | 6.3 | – | 6.1 | 6.2 | 6.3 | – | 6.3 | – | – | 6.2 | – | – | – | – | – | – | – | – | – | – | – | – | – | – |
|   | (b) | 5.4 | 5.4 | 5.4 | – | 5.5 | – | 5.3 | 5.3 | 5.4 | – | 5.5 | – | – | 5.4 | – | – | – | – | – | – | – | – | – | – | – | – | – | – |
|   | (c) | 5.0 | 5.0 | 5.1 | – | 5.0 | – | 5.1 | 5.0 | 5.1 | – | 4.9 | – | – | 4.8 | – | – | – | – | – | – | – | – | – | – | – | – | – | – |
|   | (d) | 4.5 | 4.5 | 4.3 | – | 4.4 | – | 4.5 | 4.6 | 4.4 | – | 4.3 | – | – | 4.5 | – | – | – | – | – | – | – | – | – | – | – | – | – | – |
| D | (a) | 6.0 | 6.2 | 6.3 | 6.3 | 6.4 | 6.5 | 6.1 | 6.2 | 6.3 | – | 6.3 | – | – | 6.3 | – | 6.2 | 6.0 | 6.3 | 6.2 | 6.3 | 6.1 | 6.0 | 6.9 | 6.0 | 5.3 | 6.2 | 5.7 | 6.3 |
|   | (b) | 5.3 | 5.4 | 5.5 | 5.5 | 5.5 | 5.4 | 5.2 | 5.0 | 5.0 | – | 5.4 | – | – | 5.3 | – | 4.6 | 5.1 | 4.3 | 4.7 | 4.5 | 4.4 | 4.0 | 4.2 | 3.9 | 4.4 | 4.7 | 4.9 | 4.5 |
|   | (c) | 5.2 | 5.0 | 5.2 | 5.2 | 5.0 | 5.1 | 5.3 | 5.2 | 5.1 | – | 5.1 | – | – | 5.0 | – | 5.0 | 5.0 | 5.2 | 5.0 | 5.0 | 5.0 | 5.2 | 5.2 | 5.0 | 5.0 | 5.0 | 5.0 | 5.2 |
|   | (d) | 4.5 | 4.6 | 4.5 | 4.5 | 4.4 | 4.3 | 4.5 | 4.6 | 4.4 | – | 4.4 | – | – | 4.5 | – | 4.0 | 3.7 | 4.0 | 3.6 | 4.2 | 3.1 | 3.1 | 3.0 | 2.9 | 3.8 | 4.0 | 4.1 | 3.2 |
| E | (a) | 6.0 | 6.2 | 6.3 | – | 6.5 | – | 6.0 | 6.1 | 6.3 | – | 6.5 | – | – | 6.3 | – | – | – | – | – | – | – | – | – | – | – | – | – | – |
|   | (b) | 5.4 | 5.4 | 5.4 | – | 5.3 | – | 5.3 | 5.4 | 5.2 | – | 5.4 | – | – | 5.4 | – | – | – | – | – | – | – | – | – | – | – | – | – | – |
|   | (c) | 5.1 | 5.1 | 5.1 | – | 5.0 | – | 5.1 | 5.0 | 5.1 | – | 5.1 | – | – | 5.0 | – | – | – | – | – | – | – | – | – | – | – | – | – | – |
|   | (d) | 4.6 | 4.6 | 4.4 | – | 4.5 | – | 4.5 | 4.6 | 4.3 | – | 4.4 | – | – | 4.3 | – | – | – | – | – | – | – | – | – | – | – | – | – | – |
| F | (a) | 5.8 | 6.0 | 6.3 | – | 6.4 | – | 5.9 | 6.0 | 6.2 | – | 6.4 | – | – | 6.3 | – | – | – | – | – | – | – | – | – | – | – | – | – | – |
|   | (b) | 5.3 | 5.3 | 5.4 | – | 5.4 | – | 5.3 | 5.4 | 5.3 | – | 5.2 | – | – | 5.1 | – | – | – | – | – | – | – | – | – | – | – | – | – | – |
|   | (c) | 5.0 | 5.0 | 5.1 | – | 5.1 | – | 5.1 | 5.1 | 5.2 | – | 5.0 | – | – | 5.0 | – | – | – | – | – | – | – | – | – | – | – | – | – | – |
|   | (d) | 4.3 | 4.4 | 4.2 | – | 4.5 | – | 4.3 | 4.4 | 4.2 | – | 4.3 | – | – | 4.2 | – | – | – | – | – | – | – | – | – | – | – | – | – | – |
| G | (a) | – | 5.5 | – | – | 5.7 | – | – | 5.0 | – | – | 5.5 | – | – | 5.4 | – | – | 5.6 | – | – | – | – | – | – | – | 4.8 | – | – | – |
|   | (b) | – | 4.4 | – | – | 4.2 | – | – | 4.4 | – | – | 4.4 | – | – | 4.4 | – | – | 4.7 | – | – | – | – | – | – | – | 4.0 | – | – | – |
|   | (c) | – | 4.5 | – | – | 4.2 | – | – | 3.4 | – | – | 4.0 | – | – | 4.0 | – | – | 4.9 | – | – | – | – | – | – | – | 3.0 | – | – | – |
|   | (d) | – | 3.4 | – | – | 3.1 | – | – | 3.3 | – | – | 3.1 | – | – | 3.0 | – | – | 3.0 | – | – | – | – | – | – | – | 3.1 | – | – | – |
| H | (a) | – | 5.0 | – | – | 5.3 | – | – | – | – | – | 5.2 | – | – | 5.3 | – | – | – | – | – | – | – | – | – | – | – | – | – | – |
|   | (b) | – | 4.2 | – | – | 4.0 | – | – | – | – | – | 4.0 | – | – | 4.1 | – | – | – | – | – | – | – | – | – | – | – | – | – | – |
|   | (c) | – | 4.3 | – | – | 3.9 | – | – | – | – | – | 3.9 | – | – | 3.8 | – | – | – | – | – | – | – | – | – | – | – | – | – | – |
|   | (d) | – | 3.0 | – | – | 2.9 | – | – | – | – | – | 2.9 | – | – | 2.8 | – | – | – | – | – | – | – | – | – | – | – | – | – | – |

The composite materials prepared in accordance with the present invention exhibited satisfactory results under all of the conditions employed. Rubber Compositions Nos. 1 to 3, 3 to 9, and 13 to 18 enabled the preparation of composite materials that ensured satisfactory adhesion without employing any cobalt salt of organic acids. This advantage was especially noticeable when the rubber compositions specified above were combined with Steel Cord samples C to F.

The composite material of the present invention ensures improved adhesion between the rubber material and the metal material throughout the period of its use even with conditions of ageing by heat or wet heat. In addition, the composite material solved all of the problems conventionally encountered during production such as environmental pollution and rubber scorching.

While the invention has been described in detail and with reference to specific embodiments thereof, it will be apparent to one skilled in the art that various changes and modifications can be made therein without departing from the spirit and scope thereof.

## Claims

1. A composite material comprising a rubber composition and a metal reinforcement material, characterised in that the said rubber composition contains, per 100 parts by weight of rubber, 0 to 0.5 parts by weight of a cobalt salt of an organic acid, 3 to 6 parts by weight of sulphur, and 0.5 to 2 parts by weight of N-oxy-diethylene-2-benzothiazolylsulphenamide or N-tert-butyl-2-benzothiazolylsulphenamide as a vulcanisation accelerator, and said metal material is provided with a plating of a ternary alloy consisting of 60-75 wt% copper, 4-10 wt% nickel, and the balance being zing.

2. A composite material as claimed in claim 1 characterised in that the cobalt salt of an organic acid contains 8 to 10 wt% of cobalt in the salt.

3. A composite material as claimed in claim 1 or 2 characterised in that the rubber composition contains no cobalt salt of the organic acid.

## Revendications

1. Un matériau composite comprenant une composition de caoutchouc et un matériau de renforcement métallique, caractérisé en ce que ladite composition de caoutchouc contient, pour 100 parties en poids de caoutchouc, 0 à 0,5 partie en poids d'un sel de cobalt d'un acide organique, 3 à 6 parties en poids de soufre, et 0,5 à 2 parties en poids de N-oxy-diéthylène-2-benzothiazolylsulfènamide ou de N-tert-butyl-2-benzothiazolylsulfènamide comme accélérateur de vulcanisation, et ledit matériau métallique est muni d'un placage d'un alliage ternaire constitué de 60-75 % en poids de cuivre, 4-10 % en poids de nickel, le restant étant du zinc.

2. Un matériau composite selon la revendication 1, caractérisé en ce que le sel de cobalt d'un acide organique contient 8 à 10 % de cobalt dans le sel.

3. Un matériau composite selon la revendication 1 ou 2, caractérisé en ce que la composition de caoutchouc ne contient pas de sel de cobalt d'acide organique.

## Patentansprüche

1. Verbundmaterial, das eine Gummimasse und ein metallisches Verstärkungsmaterial umfaßt, dadurch gekennzeichnet, daß die Gummimasse pro 100 Gew.-Teile Gummi 0 bis 0,5 Gew.Teile eines Kobaltsalzes einer organischen Säure, 3 bis 6 Gew.-Teile Schwefel und 0,5 bis 2 Gew.-Teile n-Oxydiethylen-2-benzothiazolylsulfenamid oder n-t-Butyl-2-benzothiazolylsulfenamid als Vulkanisationsbeschleuniger enthält und das metallische Material mit einer Beschichtung aus einer ternären Legierung versehen ist, die aus 60 bis 75 Gew.-% Kupfer, 4 bis 10 Gew.-% Nickel und Rest Zink besteht.

2. Verbundmaterial nach Anspruch 1, dadurch gekennzeichnet, daß das Kobaltsalz einer organischen Säure 8 bis 10 Gew.-% Kobalt in dem Salz enthält.

3. Verbundmaterial nach Anspruch 1 oder 2, dadurch gekennzeichnet, daß die Gummimasse kein Kobaltsalz einer organischen Säure enthält.